# EUROPÄISCHE PATENTANMELDUNG

(11) **EP 4 817 416 A1**
(43) Veröffentlichungstag der Anmeldung: **07.10.2026**
(21) Anmeldenummer: 26165601.1
(22) Anmeldetag: 17.03.2026
(51) Int. Cl.: A01M 7/00

(54) **BEFÜLL- UND/ODER FÖRDERSYSTEM FÜR EINE LANDWIRTSCHAFTLICHE ARBEITSMASCHINE UND VERFAHREN ZUM BETREIBEN EINES BEFÜLL- UND/ODER FÖRDERSYSTEMS**

(30) Priorität: 01.04.2025 DE 102025112618
(71) Anmelder: Amazonen-Werke H. Dreyer SE & Co. KG, 49205 Hasbergen (DE)
(72) Erfinder: Heidemann, Linus, 49205 Hasbergen-Gaste (DE); Claas, Jonas, 49205 Hasbergen-Gaste (DE)
(74) Vertreter: Heisel, Per-Christian

(57) **Zusammenfassung**

Befüll- und/oder Fördersystem (10) für eine landwirtschaftliche Arbeitsmaschine zur Ausbringung von Verteilgut (V) auf einer landwirtschaftlichen Nutzfläche. Um bei derartigen Anwendungsfällen die Bereitstellung, Befüllung und/oder Förderung des Verteilguts (V) weiter zu verbessern, ist eine verstellbare Rühreinrichtung (30) zum Umrühren zumindest eines in einem Behälter (11) bevorratbaren und/oder befindlichen Bestandteils des Verteilguts (V) vorgesehen, wobei die Rühreinrichtung (30), insbesondere im Behälter (11), in und/oder zwischen unterschiedlichen Konfigurationen, vorzugsweise Geometrie- und/oder Stellungskonfigurationen, verbringbar und/oder verstellbar ist.

## Beschreibung

Die Erfindung betrifft eine Befüll- und/oder Fördersystem für eine landwirtschaftliche Arbeitsmaschine gemäß dem Oberbegriff des Patentanspruches 1, ein Verfahren zum Betreiben eines Befüll- und/oder Fördersystems gemäß dem Oberbegriff des Patentanspruches 16 und eine landwirtschaftliche Arbeitsmaschine gemäß dem Oberbegriff des Patentanspruches 18.

Auf dem Gebiet der Landwirtschaft kommen üblicherweise getragene, gezogene und/oder selbstfahrende landwirtschaftliche Arbeitsmaschinen zum Einsatz. Derartige Arbeitsmaschinen sind je nach Anwendung häufig mit einem Befüll- und/oder Fördersystem ausgestattet und zur Ausbringung von Verteilgut auf einer landwirtschaftlichen Nutzfläche vorgesehen. Beispielsweise kann eine derartige Arbeitsmaschine mit einem Befüll- und/oder Fördersystem nach Art einer Verteilmaschine, insbesondere als Feldspritze, Sä- und/oder Düngermaschine oder nach Art eines Hackgeräts oder dergleichen ausgeführt sein.

Eine derartige Arbeitsmaschine mit einem gattungsgemäßen Befüll- und/oder Fördersystem, insbesondere welches ein CTS bzw. Closed-Transfer-System umfasst, ist beispielsweise in der Druckschrift EP 3 000 319 B1 oder US 12,139,392 B2 beschrieben. Ferner ist in der Druckschrift EP 2 213 164 B1 eine solche Arbeitsmaschine mit einem gattungsgemäßen Befüll- und/oder Fördersystem, insbesondere mit unverstellbarer und/oder starr angeordneter Rühreinrichtung, beschrieben. Außerdem geht aus der Druckschrift EP 3 424 319 A1 eine derartige Arbeitsmaschine mit einem gattungsgemäßen Befüll- und/oder Fördersystem, insbesondere welches ein Einspülsystem umfasst, hervor.

In einer Vielzahl von Anwendungsbereichen könnte die Bereitstellung, Befüllung und/oder Förderung des Verteilguts weiter verbessert werden, wenn das Verteilgut, insbesondere während dem Vorhalten und/oder dem Ausleiten aus einem Behälter, zumindest teilweise und in umrührender Weise in Bewegung versetzbar ist. Die der Erfindung zugrundeliegende Aufgabe besteht somit darin, das Bereitstellen, Befüllen und/oder die Förderung von Verteilgut in der landwirtschaftlichen Praxis weiter zu verbessern.

Die Aufgabe wird gelöst durch ein Befüll- und/oder Fördersystem der eingangs genannten Art, wobei das erfindungsgemäße Befüll- und/oder Fördersystem eine verstellbare Rühreinrichtung zum Umrühren zumindest eines in einem Behälter bevorratbaren und/oder befindlichen Bestandteils des Verteilguts umfasst, wobei die Rühreinrichtung, insbesondere im Behälter, in und/oder zwischen unterschiedlichen Konfigurationen, vorzugsweise Geometrie- und/oder Stellungskonfigurationen, verbringbar und/oder verstellbar ist.

Die Erfindung macht sich die Erkenntnis zunutze, dass durch eine derartig ausgeführte verstellbare Rühreinrichtung ein im Behälter befindliches und/oder vorhaltbares Verteilgut bedarfs- und/oder situationsgerecht umgerührt werden kann, was zu einer erheblichen Steigerung hinsichtlich der Homogenität des Verteilguts im Behälter und somit zu einer verbesserten Bereitstellung, Befüllung und/oder der Förderung des Verteilguts führt. Ferner ist somit eine verbesserte Ausbringqualität des auf die Nutzfläche applizierten und/oder applizierbaren Verteilguts erreicht. Insbesondere entfällt somit die Notwendigkeit eines manuellen Schüttelns und/oder Aufrührens durch den Anwender, um das im, vorzugsweise tragbaren und/oder abnehmbaren, Behälter befindliche und/oder vorhaltbare Verteilgut zu homogenisieren. Das Verstellen und/oder Umkonfigurieren der Rühreinrichtung und/oder das Umrühren werden bevorzugt automatisch und/oder motorisch veranlasst. Alternativ oder zusätzlich kann die Rühreinrichtung behälterspezifisch, verteilgutspezifisch und/oder füllstandspezifisch, insbesondere auf die jeweilige Größe und/oder Form des Behälters und/oder auf die Art bzw. Type des Verteilguts und/oder Bestandteils und/oder den jeweiligen Füllstand des Verteilguts oder Bestandteils im Behälter, konfigurierbar sein. Bevorzugt ist die Rühreinrichtung, insbesondere zumindest ein in den Behälter hineinragender Teil oder Abschnitt der Rühreinrichtung, entsprechend innerhalb des Behälters konfigurierbar und/oder zwischen den unterschiedlichen Konfigurationen verstellbar ausgeführt.

Die Rühreinrichtung ist bevorzugt motorisch und/oder rotatorisch antreibbar ausgebildet. Bevorzugt ist die Rühreinrichtung dabei drehbar ausgeführt. Ferner bevorzugt ist vorgesehen, dass die Rühreinrichtung dazu eingerichtet ist, nach dem Überführen und/oder Anpassen der Konfiguration im Behälter angetrieben zu werden.

Im erfindungsgemäßen Zusammenhang sind unter dem Begriff "Konfiguration" bzw. "Konfigurationen" vorzugsweise ein oder mehrere Zustände, Anordnungen und/oder Einstellungen zu verstehen, in und/oder mit welchen die Rühreinrichtung, insbesondere innerhalb des Behälters oder innerhalb der Behälter, verbringbar und/oder betreibbar ist. Ferner kann unter einer jeweiligen Konfiguration eine Geometrie- und/oder Stellungskonfigurationen der Rühreinrichtung verstanden werden. Beispielsweise kann sich die Rühreinrichtung zwischen den Konfigurationen in der Geometrie und/oder Stellung, insbesondere gegenüber dem Behälter, unterscheiden. Alternativ oder zusätzlich kann sich die Konfiguration der Rühreinrichtung zwischen den, insbesondere unterschiedlichen, Behältern unterscheiden. Mit anderen Worten kann beispielsweise für einen ersten Behälter eine andere Konfiguration der Rühreinrichtung vorgesehen sein als für einen zweiten oder anderen Behälter. Ferner können alternativ oder zusätzlich unterschiedliche Konfigurationen für ein und denselben Behälter vorgesehen sein. Mit noch anderen Worten kann vorgesehen sein, dass die Geometrie und/oder Stellung der Rühreinrichtung innerhalb des oder der Behälter modifizierbar und/oder anpassbar ist. Ferner können bevorzugt neben wenigstens einer ersten und zweiten Konfiguration noch ein oder mehrere weitere Konfigurationen für die Rühreinrichtung vorgesehen sein.

Das Verteilgut kann je nach Anwendung und/oder Ausführung der Arbeitsmaschine als flüssiges und/oder granulares Verteilgut ausgeführt sein. Ferner kann das Verteilgut als Spritzmittel oder als Saatgut oder Düngemittel ausgeführt sein. Besonders bevorzugt ist das Verteilgut jedoch als Spritzmittel und/oder als landwirtschaftliche Spritzflüssigkeit ausgeführt und insbesondere zum Ausbringen bzw. Applizieren auf eine landwirtschaftliche Nutzfläche und/oder darauf befindlicher Pflanzen, z.B. Nutzpflanzen und/oder Unkräuter, vorgesehen. Das Verteilgut bzw. Spritzmittel kann dabei aus wenigstens einer Trägerflüssigkeit oder Grundbrühe und/oder wenigstens einem Wirkstoff ausgeführt sein. Die wenigstens eine Trägerflüssigkeit oder Grundbrühe und der wenigstens eine Wirkstoff können dabei bereits vor der Ausbringung und/oder während der Ausbringung zum auszubringenden Spritzmittel bzw. zur auszubringenden Spritzflüssigkeit vermischt oder angerührt werden. Alternativ oder zusätzlich kann der wenigstens eine Wirkstoff maschinenintern über eine Einspülschleuse und/oder nach Art einer Direkteinspeisung zu der Trägerflüssigkeit zugegeben und/oder zudosiert werden. Das auszubringende Spritzmittel bzw. die Spritzflüssigkeit kann dabei je nach Anwendung nach Art eines Pflanzenschutzmittels, Düngemittels, Unkraut- und/oder Schädlingsbekämpfungsmittels oder dergleichen ausgeführt sein. Alternativ oder zusätzlich können unter einem Bestandteil des Verteilguts ein oder mehrere Wirkstoffe für das Verteilgut verstanden werden, welche insbesondere zur Zudosierung und/oder Vermischung mit dem Verteilgut und/oder der Trägerflüssigkeit und/oder der Grundbrühe vorgesehen sind.

Insbesondere können dem Befüll- und/oder Fördersystem ein oder mehrere Behälter zugeordnet sein. Das wenigstens eine Verteilgut und/oder der wenigstens eine Bestandteil des Verteilguts können dabei in dem einen oder den mehreren Behältern bevorratbar sein und/oder vorgehalten werden. Ferner können auch unterschiedliche Verteilgüter und/oder unterschiedliche Bestandteile des einen oder der mehreren Verteilgüter in unterschiedlichen Behältern bevorratbar sein. Ferner kann, insbesondere als Spritzmittel ausgeführtem Verteilgut, wenigstens einer der mehreren Behälter für eine Trägerflüssigkeit oder Grundbrühe und wenigstens ein anderer Behälter für wenigstens einen Wirkstoff vorgesehen sein. Des Weiteren kann wenigstens ein Behälter nach Art eines, insbesondere großvolumigen, Tanks bzw. Haupttanks und wenigstens ein weiterer oder anderer Behälter nach Art eines, insbesondere kleinvolumigen, Wirkstoffgebindes oder Wirkstoffkanisters ausgeführt sein. Bevorzugt kann dabei vorgesehen sein, dass die wenigstens eine Rühreinrichtung im zumindest einen, insbesondere großvolumigen, Flüssigkeitstank und/oder Haupttank angeordnet und/oder einführbar ist. Ferner kann vorgesehen sein, dass die wenigstens eine Rühreinrichtung oder eine andere oder zusätzliche Rühreinrichtung alternativ oder zusätzlich einem anderen, insbesondere mobilen und/oder tragbaren und/oder mit dem Befüll- und/oder Fördersystem verbindbaren, Behälter, vorzugsweise Wirkstoffgebinde oder Wirkstoffkanister, angeordnet und/oder einführbar ist. Mit anderen Worten kann die Rühreinrichtung vorzugsweise für wenigstens einen Behälter des Befüll- und/oder Fördersystems und/oder der Maschine und/oder für Behälter, die mit dem Befüll- und/oder Fördersystems verbindbar sind, vorgesehen sein. Alternativ oder zusätzlich kann die Rühreinrichtung für Behälter, insbesondere nach Art von Wirkstoffgebinden oder Wirkstoffkanistern, vorgesehen sein, welche zum Befüllen und/oder Umfüllen von Verteilgut und/oder zumindest eines Bestandteils des Verteilguts in das Befüll- und/oder Fördersystem vorgesehen sind.

In einer bevorzugten Ausführungsform des erfindungsgemäßen Befüll- und/oder Fördersystems ist an der Rühreinrichtung wenigstens eine definierte Rührspannweite und/oder Rührreichweite einstellbar. Insbesondere kann die Rührspannweite und/oder Rührreichweite hierbei auch als Rührbreite und/oder Rührdurchmesser bezeichnet werden. Bevorzugt ist hierbei vorgesehen, dass sich die Rührspannweite und/oder Rührreichweite, insbesondere Rührbreite und/oder der Rührdurchmesser, zwischen den Konfigurationen unterscheidet. Besonders bevorzugt ist hier vorgesehen, dass die Rühreinrichtung in der Breite und/oder im Durchmesser verstellbar ist. Somit ist eine Rühreinrichtung geschaffen, welche bedarfs- und/oder situationsgerecht, insbesondere spezifisch an den jeweiligen Behälter, das Verteilgut und/oder den Füllstand, anpassbar ist. Ferner bevorzugt kann eine einstellbare Rührspannweite und/oder Rührreichweite, insbesondere Rührbreite und/oder Rührdurchmesser, vorgesehen sein, welche sich gegenüber einer dem oder der Behälter zugeordneten Durchführöffnung und/oder Behälteröffnung zum Durchführen der Rühreinrichtung unterscheidet, wobei die einstellbare Rührspannweite und/oder Rührreichweite, insbesondere Rührbreite und/oder Rührdurchmesser, bevorzugt größer ist als die jeweilige Durchführöffnung und/oder Behälteröffnung. Infolge dieser Maßnahme ist eine verstellbare Rühreinrichtung mit besonders großer Rührwirkung bzw. Ruhrleistung geschaffen.

In einer Weiterbildung des erfindungsgemäßen Befüll- und/oder Fördersystems ist an der Rühreinrichtung wenigstens eine definierte Rührausrichtung, insbesondere ein Rührwinkel, einstellbar. Bevorzugt ist dabei vorgesehen, dass sich die Rührausrichtung, insbesondere der Rührwinkel, zwischen den Konfigurationen unterscheidet. Ferner bevorzugt ist die Rühreinrichtung hierbei in einem oder mehreren Anstellwinkeln gegenüber dem Behälter anstellbar und/oder anwinkelbar. Anhand einer derartigen Ausführung ist eine Rühreinrichtung mit besonders großer Flexibilität geschaffen, welche eine optimierte Anpassung der Rühreinrichtung an unterschiedliche Behälter und/oder Verteilgüter ermöglicht. Insbesondere wird somit eine gleichmäßigere Durchmischung und eine effizientere Förderung des Verteilguts erreicht, was zu einer verbesserter Ausbringqualität und/oder Betriebssicherheit führt.

In einer anderen bevorzugten Ausführungsform des erfindungsgemäßen Befüll- und/oder Fördersystems ist an der Rühreinrichtung wenigstens eine definierte Rührhöhe einstellbar. Insbesondere kann die Rührhöhe hierbei auch als Eindringhöhe und/oder Eindringtiefe der Rühreinrichtung in den Behälter und/oder in das bevorratbare und/oder vorgehaltene Verteilgut verstanden werden. Bevorzugt ist hierbei vorgesehen, dass sich die Rührhöhe, insbesondere die Eindringhöhe und/oder Eindringtiefe, zwischen den Konfigurationen unterscheidet. Besonders bevorzugt ist hier vorgesehen, dass die Rühreinrichtung relativ zum Behälter gesehen in der Höhe und/oder Eindringtiefe, also insbesondere mit welcher Länge die Rühreinrichtung in den Behälter hineinragt, verstellbar ist. Somit ist eine Rühreinrichtung geschaffen, welche bedarfs- und/oder situationsgerecht, insbesondere spezifisch an den jeweiligen Behälter bzw. Behälterhöhe, das Verteilgut und/oder den Füllstand, anpassbar ist.

In einer anderen Weiterbildung des erfindungsgemäßen Befüll- und/oder Fördersystems weist die Rühreinrichtung ein oder mehrere Rührelemente auf. Die Rühreinrichtung ist hierbei vorzugsweise nach Art eines mechanischen Rührwerks ausgebildet. Die Rührelemente können hierbei ferner bevorzugt nach Art von Flügelelementen, Paddeln und/oder Schaufeln ausgeführt sein. Alternativ oder zusätzlich sind auch Stabelemente, Rippen oder andere vergleichbare zum Umrühren von, insbesondere flüssigem oder festem, Verteilgut geeignete Elemente denkbar. Beispielhaft kann die Rühreinrichtung, insbesondere mittels der Rührelemente, zumindest teilweise nach Art eines Rührer, Rührwelle und/oder Rührstabs ausgeführt sein und/oder kann wenigstens einen Rührer, Rührwelle und/oder Rührstab umfassen. Ferner können das eine oder können die mehreren Rührelemente an einem, insbesondere freien, Ende der Rühreinrichtung, vorzugsweise an einem Ende des Rührers und/oder Rührstabs, angeordnet sein. Eine derartige Ausführungsform ist hinsichtlich des Wirkungsgrades zum Umrühren des Verteilguts besonders vorteilhaft.

Bevorzugt sind die Rührelemente zumindest teilweise aus einem metallischen Material, insbesondere aus Edelstahl, ausgebildet. Eine derartige Ausführungsform ist besonders robust. Alternativ oder zusätzlich können die Rührelemente zumindest abschnittsweise aus einem Kunststoffmaterial, insbesondere Gummi, ausgebildet sein. Eine derartige Ausführungsform hat den Vorteil, dass die Rührelemente zumindest teilweise nachgiebig sind, was bei Überlast und/oder Blockaden von Vorteil ist, beispielsweise um Beschädigungen an der Rühreinrichtung und/oder am Behälter zumindest nahezu auszuschließen.

In einer weiteren bevorzugten Ausführungsform des erfindungsgemäßen Befüll- und/oder Fördersystems sind das eine oder die mehreren Rührelemente, insbesondere gegenüber einer Längsachse der Rühreinrichtung und/oder dem Behälter gesehen, in unterschiedlichen Stellungen verbringbar. Die Rührelemente sind dabei bevorzugt relativ innerhalb und/oder zu der Rühreinrichtung gesehen, insbesondere gegenüber dem Behälter, zwischen einer zumindest teilweise eingefahrenen und/oder eingeklappten Stellung, welche vorzugsweise einer ersten Konfiguration der Rühreinrichtung zugeordnet ist, und einer ausgefahrenen und/oder ausgeklappten Stellung, welche einer zweiten Konfiguration zugeordnet ist, verstellbar. Ferner bevorzugt kann die Rühreinrichtung entlang einer Längsachse, vorzugsweise Symmetrieachse oder Drehachse, ausgebildet sein. Alternativ oder zusätzlich ist vorgesehen, dass in einer, insbesondere ausgefahrenen und/oder ausgeklappten, Stellung wenigstens ein Ende und/oder Abschnitt des einen oder der mehreren Rührelemente auf einer der Längsachse zugewandten Seite verbleibt und/oder verbringbar ist, während wenigstens ein anderes Ende und/oder anderer Abschnitt des einen oder der mehreren Rührelemente auf eine der Längsachse abgewandten Seite verstellt und/oder verbringbar ist. Bei einer derartigen Ausführungsform ist der Wirkungsgrad zum Umrühren des Verteilguts noch weiter gesteigert. Ferner ist somit eine weiter verbesserte Flexibilität zur Anpassung der Rühreinrichtung auf den jeweiligen Bedarf, insbesondere an die jeweilige Behältergröße, Behälterform, Füllstand und/oder Verteilguttype, erreicht.

Im erfindungsgemäßen Zusammenhang ist die Längsachse der Rühreinrichtung vorzugsweise durch eine Symmetrieachse gebildet und/oder fällt zumindest abschnittsweise mit der Symmetrieachse der Rühreinrichtung zusammen. Alternativ oder zusätzlich kann die Längsachse bevorzugt durch eine Drehachse der Rühreinrichtung, um welche die Rühreinrichtung zum Umrühren antreibbar ist, gebildet sein und/oder zumindest abschnittsweise mit dieser zusammenfallen.

In einer weiteren Weiterbildung des erfindungsgemäßen Befüll- und/oder Fördersystems sind das eine oder die mehreren Rührelemente, insbesondere gegenüber der Längsachse der Rühreinrichtung und/oder dem Behälter gesehen, verschiebbar und/oder schwenkbar. Das eine oder die mehreren Rührelemente sind hierbei bevorzugt verschiebbar und/oder schwenkbar innerhalb der Rühreinrichtung angeordnet. Alternativ oder zusätzlich können wenigstens ein, mehrere oder sämtliche Rührelemente entlang und/oder quer zur Längsachse der Rühreinrichtung verschiebbar ausgebildet sein. Ferner können alternativ oder zusätzlich wenigstens ein, mehrere oder sämtliche Rührelemente gegenüber der Längsachse der Rühreinrichtung verschwenkbar und/oder klappbar ausgebildet sein. Eine derartige Ausführung ermöglicht eine verhältnismäßig einfach ausgeführte und dabei betriebssichere Verstellung des einen oder der mehreren Rührelemente.

Des Weiteren ist bevorzugt vorgesehen, dass das eine oder die mehreren Rührelemente selbsttätig oder fernbetätigt zwischen den Stellungen verstellbar, verschiebbar und/oder verschwenkbar ausgebildet sind. Bevorzugt können das eine oder die mehreren Rührelemente, insbesondere mittels wenigstens einer Federeinrichtung, vorgespannt und/oder vorspannbar sein. Alternativ oder zusätzlich kann dem einen oder den mehreren Rührelementen wenigstens ein Aktuator zur Betätigung und/oder Verstellung zugeordnet sein. Das Weiteren kann vorgesehen sein, dass das eine oder die mehreren Rührelemente mittels eines Fluids, insbesondere pneumatisch oder hydraulisch, oder mittels des Verteilguts selbst betätigbar und/oder verstellbar sind. Alternativ oder zusätzlich können das eine oder die mehreren Rührelemente automatisch mit dem Einfahren und/oder Ausfahren der Rühreinrichtung in oder aus dem Behälter gemeinsam verstellbar und/oder betätigbar sein. Mit anderen Worten können sich das eine oder die mehreren Rührelemente bevorzugt beim Einfahren der Rühreinrichtung in den Behälter selbsttätig auseinander bewegen und/oder verstellen und/oder beim Ausfahren der Rühreinrichtung aus dem Behälter heraus zueinander zu bewegen und/oder verstellen.

Darüber hinaus ist ein erfindungsgemäßes Befüll- und/oder Fördersystem bevorzugt, bei welchem die Rühreinrichtung, insbesondere das eine oder die mehreren Rührelemente, zwischen einer in medialer Richtung orientierten und/oder komprimierten Konfiguration, insbesondere Stellung, und einer in lateraler Richtung erweiterten und/oder ausgebreiteten Konfiguration, insbesondere Stellung, verstellbar ist. Die, insbesondere gegenüber der Längsachse gesehen, in medialer Richtung orientierte und/oder komprimierte Konfiguration, insbesondere Stellung, ist bevorzugt zum Einführen der Rühreinrichtung in den Behälter und/oder zum Verstellen der Rühreinrichtung auf eine definierte Rührhöhe und/oder Rührausrichtung vorgesehen. Ferner bevorzugt ist die, insbesondere gegenüber der Längsachse gesehen, in lateraler Richtung erweiterte und/oder ausgebreitete Konfiguration, insbesondere Stellung, bevorzugt zum Umrühren des Verteilguts und/oder des wenigstens einen Bestandteils des Verteilguts im Behälter vorgesehen. Eine derartige Ausführungsform hat den entscheidenden Vorteil, dass die Rühreinrichtung somit durch verhältnismäßig besonders kleine Durchführ und/oder Behälteröffnungen hindurch einführbar ist und dabei dennoch, insbesondere mittels der aufgeweiteten Konfiguration und/oder Stellung, eine besonders hohe Rührwirkung erreichen kann. Ferner ist dadurch erreicht, dass zur Verstellung der komprimierten Rühreinrichtung verhältnismäßig wenig oder weniger Energie bzw. nur eine geringe oder geringere Verstellkraft erforderlich ist.

In einer anderen bevorzugten Ausführungsform des erfindungsgemäßen Befüll- und/oder Fördersystems ist die Rühreinrichtung entlang einer bzw. der Längsachse ausgebildet, wobei die Rühreinrichtung, insbesondere das eine oder die mehreren Rührelemente, in einer Richtung quer zu der Längsachse verstellbar ist. Mit anderen Worten ist die Rühreinrichtung, insbesondere das eine oder die mehreren Rührelemente, von einer gegenüber der Längsachse gesehen innenliegenden und/oder anliegenden Stellung in eine, vorzugsweise lateral, nach Außen hin weisende und/oder abstehende Stellung verstellbar und/oder überführbar.

Bei einer besonders bevorzugten Ausführungsform des erfindungsgemäßen Befüll- und/oder Fördersystems ist die Rühreinrichtung zwischen wenigstens einer, vorzugsweise aus dem Behälter heraus, ausgefahrenen und/oder herausgezogenen Außerbetriebsstellung und einer, vorzugsweise in den Behälter hinein, eingefahrenen und/oder eingeschobenen Inbetriebsstellung verstellbar. Die Inbetriebsstellung ist hierbei vorzugsweise für den Rührbetrieb und/oder zum Umrühren des Verteilguts und/oder wenigstens einen Bestandteils des Verteilguts im Behälter vorgesehen. Ferner bevorzugt ist die Außerbetriebsstellung für die Verbringung der Rühreinrichtung außerhalb des Rührbetriebs und/oder außerhalb des Behälters vorgesehen. Alternativ oder zusätzlich kann unter der ausgefahrenen und/oder herausgezogenen Außerbetriebsstellung auch eine zusammengezogene und/oder zusammengeschobene oder verkürzte Stellung der Rühreinrichtung verstanden werden. Ferner kann alternativ oder zusätzlich unter der eingefahrenen und/oder eingeschobenen Inbetriebsstellung auch eine auseinandergezogene und/oder auseinandergeschobene und/oder verlängerte Stellung der Rühreinrichtung verstanden werden. Besonders bevorzugt befindet sich die Rühreinrichtung hierbei in der Außerbetriebsstellung außerhalb des Behälters. Alternativ oder zusätzlich befindet sich die Rühreinrichtung in der Inbetriebsstellung zumindest teilweise innerhalb des Behälters. Eine derartige Ausführform hat den Vorteil, dass der Behälter für den Anwender besonders komfortabel mit dem Befüll- und/oder Fördersystem verbindbar und/oder lösbar ist.

Bei einer ferner bevorzugten Ausführungsform des erfindungsgemäßen Befüll- und/oder Fördersystems ist die Rühreinrichtung dazu eingerichtet, eine dem Behälter zugeordnete Verschlusseinrichtung, insbesondere einen Deckel, beim Einfahren in den Behälter selbsttätig zu öffnen und/oder beim Ausfahren aus dem Behälter selbsttätig, insbesondere fluid- und/oder flüssigkeitsdicht, zu verschließen. Vorzugsweise ist hierbei vorgesehen, dass die Verschlusseinrichtung, insbesondere der verschließbare Deckel, des Behälters und/oder unterschiedlicher bzw. verschiedener Behälter von der Rühreinrichtung, bevorzugt automatisch, beim Einfahren in den jeweiligen Behälter und/oder beim Ausfahren aus dem Behälter heraus zu verstellen, insbesondere zu öffnen und/oder zu verschließen. Bei einer derartigen Ausführungsform ist der Vorgang des Öffnens und/oder Schließens an einem Behälter weiter vereinfacht.

In einer besonders bevorzugten Weiterbildung des erfindungsgemäßen Befüll- und/oder Fördersystems ist eine Reinigungseinrichtung zur Innenreinigung und/oder zum Ausspülen eines Behälters vorgesehen, wobei die Reinigungseinrichtung gemeinsam mit der Rühreinrichtung verstellbar ist. Die Reinigungseinrichtung kann dabei vorzugsweise zumindest abschnittsweise entlang der Rühreinrichtung angeordnet und/oder ausgebildet sein. Alternativ oder zusätzlich kann die Reinigungseinrichtung zumindest abschnittsweise innerhalb der Rühreinrichtung angeordnet sein. Die Reinigungseinrichtung kann dabei je nach Anwendung beispielsweise als mechanische und/oder fluidische bzw. hydraulische Reinigungseinrichtung ausgeführt sein. Ferner ist vorstellbar, dass die Reinigungseinrichtung alternativ oder zusätzlich in unterschiedlichen Konfigurationen verbringbar ist. Ferner kann die Reinigungseinrichtung alternativ oder zusätzlich in unterschiedlichen Stellungen, insbesondere in einer Außerbetriebsstellung und in einer Inbetriebsstellung und/oder einer aus- und/oder eingeklappten Stellung, überführbar und/oder verbringbar sein. Ferner bevorzugt kann die Reinigungseinrichtung, insbesondere relativ zur Rühreinrichtung gesehen, schwenkbar und/oder verschiebbar ausgebildet sein. Mit anderen Worten ist die Reinigungseinrichtung vorzugsweise in die Rühreinrichtung integriert. Somit ist eine Ausführungsform geschaffen, die besonders kompakt im Aufbau und dabei vielseitig einsetzbar ist.

Bei einer weiteren besonders bevorzugten Ausführungsform des erfindungsgemäßen Befüll- und/oder Fördersystems ist der Reinigungseinrichtung wenigstens eine Düse zugeordnet, mittels welcher ein Reinigungsfluid in den Behälter einleitbar ist, wobei die Reinigungseinrichtung dazu eingerichtet ist, den Behälter mittels des über die Düse einleitbaren Reinigungsfluids zu reinigen und/oder zu spülen. Ferner bevorzugt kann die Reinigungseinrichtung auch mehrere derartige Düsen umfassen. Das Reinigungsfluid kann dabei das Verteilgut und/oder wenigstens ein Bestandteil des Verteilguts selbst sein. Ferner bevorzugt kann sich das Reinigungsfluid vom Verteilgut unterscheiden. Beispielsweise kann das Reinigungsfluid auch Wasser oder Druckluft sein.

In einer weiteren besonders bevorzugten Weiterbildung des erfindungsgemäßen Befüll- und/oder Fördersystems ist ein Einspül- und/oder Closed-Transfer-System zum Aufnehmen und/oder Übertragen wenigstens eines Bestandteils des Verteilguts aus einem, insbesondere mobilen und/oder händisch tragbaren, Behälter in das Befüll- und/oder Fördersystem vorgesehen, wobei die Rühreinrichtung und/oder die Reinigungseinrichtung dem Einspül- und/oder Closed-Transfer-System zugeordnet ist, und vorzugsweise zum Umrühren und/oder Reinigen des, insbesondere mobilen und/oder händisch tragbaren, Behälters vorgesehen ist. Mit anderen Worten ist die Rühreinrichtung und/oder Reinigungseinrichtung dabei Teil eines Einspül- und/oder Closed-Transfer-Systems des Befüll- und/oder Fördersystems.

Unter einem Closed-Transfer-System (CTS) ist vorzugsweise ein System zum kontaktlosen Transfer von Verteilgut und/oder wenigstens einem Bestandteil eines Verteilguts aus einem verbindbaren und/oder lösbaren Behälter, insbesondere Kanister, und einem Befüll- und/oder Fördersystem, insbesondere einer Arbeitsmaschine und/oder einem der Arbeitsmaschine zugeordneten Behälter bzw. Zentral- oder Hauptbehälter, zu verstehen. Dem Closed-Transfer-System kann dabei wenigstens eine Kupplungseinrichtung und/oder eine Behälteraufnahme zum Aufnehmen und/oder Verbinden wenigstens eines Behälters mit dem Befüll- und/oder Fördersystem zugeordnet sein.

Ferner ist unter einem Einspülsystem bevorzugt ein System zum Einfüllen und/oder Einkippen von Verteilgut und/oder wenigstens eines Bestandteils eines Verteilguts aus einem von einem Anwender tragbaren Behälter, insbesondere Kanister, in das Befüll- und/oder Fördersystem, insbesondere in die Arbeitsmaschine und/oder in einen der Arbeitsmaschine zugeordneten Behälter bzw. Zentral- oder Hauptbehälter, zu verstehen. Ferner bevorzugt kann einem derartigen Einspülsystem eine Auffangeinrichtung nach Art einer Auffangwanne oder dergleichen zugeordnet sein, in welche der tragbare Behälter umgefüllt wird und/oder umfüllbar ist und/oder in welcher die Rühreinrichtung und/oder Reinigungseinrichtung zumindest teilweise angeordnet ist.

Besonders bevorzugt ist die wenigstens eine Rühreinrichtung nach Art eines Kanisterrührwerks, insbesondere eines Einspül- und/oder Closed-Transfer-Systems, ausgebildet. Alternativ oder zusätzlich kann die wenigstens eine Reinigungseinrichtung dabei nach Art einer, insbesondere in die Rühreinrichtung integrierten, Kanisterreinigungseinrichtung ausgeführt sein.

Darüber hinaus ist vorzugsweise vorstellbar, dass das Befüll- und/oder Fördersystem mehrere Rühreinrichtungen und/oder Reinigungseinrichtungen umfasst. Dabei können die mehreren Rühreinrichtungen und/oder Reinigungseinrichtungen unterschiedlichen Behältern zugeordnet sein. Ferner sind somit mehrere, insbesondere von einem Anwender tragbare, Behälter gleichzeitig mit dem Befüll- und/oder Fördersystem verbindbar. In vereinfachten Worten dargestellt, hat eine derartige Ausführungsform insbesondere den Vorteil, dass mehrere Kanister, vorzugsweise nach Art von Wirkstoffpatronen oder dergleichen, und in fluid- und/oder verteilgutleitenden Weise an einem solchen Befüll- und/oder Fördersystem, insbesondere an der Arbeitsmaschine, anbringbar sind und das jeweilige Verteilgut und/oder wenigstens der jeweilige Bestandteil des Verteilguts dabei von den jeweiligen Rühreinrichtungen im jeweiligen Behälter mit maximaler Homogenität bereitstellbar ist.

Die der Erfindung zugrunde liegende Aufgabe wird ferner mit einem Verfahren zum Betreiben eines Befüll- und/oder Fördersystems der eingangs genannten Art gelöst. Hinsichtlich der Vorteile und Modifikationen wird zunächst auf die Vorteile und Modifikationen der vorstehenden beschriebenen bevorzugten Ausführungsformen und Weiterbildungen des erfindungsgemäßen Befüll- und/oder Fördersystems verwiesen.

Es wird auch hier ausdrücklich darauf hingewiesen, dass die Merkmale des vorstehend beschriebenen erfindungsgemäßen Befüll- und/oder Fördersystems, insbesondere der bevorzugten Ausführungsformen und/oder Ausführungsbeispiele, wie sie weiter oben beschrieben werden, einzeln oder miteinander kombinierbar bei dem erfindungsgemäßen Verfahren Anwendung finden können. Dies gilt auch andersherum. So können auch Merkmale des erfindungsgemäßen Verfahrens mit weiteren Merkmalen des erfindungsgemäßen Befüll- und/oder Fördersystems und/oder der bevorzugten Ausführungsformen und Ausführungsbeispiele kombiniert werden.

Alternativ oder zusätzlich ist das Verfahren zum Betreiben einer landwirtschaftlichen Arbeitsmaschine zur Ausbringung von Verteilgut auf einer landwirtschaftlichen Nutzfläche vorgesehen.

Bei dem erfindungsgemäßen Verfahren ist insbesondere eine verstellbare Rühreinrichtung zum Umrühren zumindest eines in einem Behälter bevorratbaren und/oder befindlichen Bestandteils des Verteilguts vorgesehen, wobei die Rühreinrichtung, insbesondere im Behälter, in und/oder zwischen unterschiedlichen Konfigurationen, vorzugsweise Geometrie- und/oder Stellungskonfigurationen, verbracht und/oder verstellt wird.

In einer bevorzugten Ausführungsform des erfindungsgemäßen Verfahrens wird die Rühreinrichtung in einen Behälter eingeführt und/oder eingefahren, insbesondere ausgezogen. Die Rühreinrichtung wird dabei bevorzugt in einer in den Behälter und/oder verschiedene Behälter eindringenden und/oder hineinragenden Weise eingeführt. Insbesondere wird die Rühreinrichtung dabei zumindest teilweise in eine Position innerhalb des Behälters überführt und/oder verfahren. Alternativ oder zusätzlich wird die Rühreinrichtung im Behälter zwischen verschiedenen Konfigurationen, insbesondere Stellungen verstellt. Mit anderen Worten wird die Rühreinrichtung innerhalb des Behälters und/oder der verschiedenen Behälter von einer Außerbetriebsstellung in eine Inbetriebsstellug bzw. Rührstellung überführt und/oder ausgeklappt. Dabei wird alternativ oder zusätzlich eine definierte Rührreichweite und/oder Rührausrichtung und/oder Rührhöhe eingestellt. Alternativ oder zusätzlich werden dabei ein oder mehrerer an der Rühreinrichtung angeordnete und/oder ausgebildete Rührelemente, vorzugsweise zwischen unterschiedlichen Stellungen gegenüber einer Längsachse der Rühreinrichtung und/oder dem Behälter, verstellt. Die Rührelemente werden dabei bevorzugt geschwenkt bzw. geklappt und/oder verschoben. In einem alternativen oder zusätzlichen Schritt wird das Verteilgut mittels der, insbesondere verstellten und/oder in eine Inbetriebsstellung überführten, Rühreinrichtung, insbesondere Rührelemente, umgerührt. In einer ferner alternativen oder zusätzlichen Schritt wird die Rühreinrichtung aus dem Behälter ausgeführt und/oder ausgefahren, insbesondere eingezogen. Insbesondere wird die Rühreinrichtung dabei in eine Position außerhalb des Behälters überführt und/oder verfahren.

Darüber hinaus kann dem Befüll- und/oder Fördersystem und/oder der Arbeitsmaschine vorzugsweise ein, insbesondere zumindest teilweise elektronisches, Steuer- und/oder Regelsystem zugeordnet sein, mittels welchem das Verfahren ausgeführt werden kann und/oder ausführbar ist.

Die der Erfindung zugrunde liegende Aufgabe wird außerdem mit einer landwirtschaftlichen Arbeitsmaschine, vorzugsweise Verteilmaschine, der eingangs genannten Art gelöst, wobei die Arbeitsmaschine insbesondere ein Befüll- und/oder Fördersystem umfasst und/oder zum Ausführen eines Verfahrens ausgebildet ist, welches nach zumindest einer der vorstehend beschriebenen Ausführungsformen und/oder Weiterbildungen des erfindungsgemäßen Befüll- und/oder Fördersystems und/oder Verfahrens ausgebildet ist. Hinsichtlich der Vorteile und Modifikationen wird zunächst auf die Vorteile und Modifikationen der vorstehenden beschriebenen bevorzugten Ausführungsformen und Weiterbildungen des erfindungsgemäßen Befüll- und/oder Fördersystems und/oder Verfahrens verwiesen.

Es wird ausdrücklich darauf hingewiesen, dass die Merkmale des vorstehend beschriebenen erfindungsgemäßen Befüll- und/oder Fördersystems und/oder Verfahrens und/oder derer bevorzugten Ausführungsformen und/oder Ausführungsbeispiele, wie sie weiter oben beschrieben werden, einzeln oder miteinander kombinierbar bei der erfindungsgemäßen Arbeitsmaschine Anwendung finden können. Dies gilt auch andersherum. So können auch Merkmale der erfindungsgemäßen Arbeitsmaschine mit weiteren Merkmalen des erfindungsgemäßen Befüll- und/oder Fördersystems und/oder Verfahrens und/oder derer bevorzugten Ausführungsformen und Ausführungsbeispiele kombiniert werden.

In einer besonders bevorzugten Ausführungsform der erfindungsgemäßen Arbeitsmaschine ist die Arbeitsmaschine als landwirtschaftliche Feldspritze ausgebildet. Ferner bevorzugt ist das Verteilgut dabei nach Art eines Spritzmittels ausgeführt. Die Arbeitsmaschine ist hierbei bevorzugt dazu eingerichtet, dass als Spritzmittel ausgeführte Verteilgut auf die Nutzfläche, insbesondere auf darauf befindlichen Nutzpflanzen und/oder Unkräuter, zu applizieren.

In einer ferner bevorzugten Ausführungsform der erfindungsgemäßen Arbeitsmaschine ist die Arbeitsmaschine als Sä- und/oder Düngermaschine ausgebildet. Vorzugsweise ist das Verteilgut dabei alternativ oder zusätzlich nach Art eines granularen und/oder schüttgutartigen Saatguts und/oder Düngemittels ausgeführt. Alternativ oder zusätzlich kann die Sä- und/oder Düngermaschine dazu eingerichtet sein, ein flüssiges Verteilgut auszubringen. Insbesondere können dabei mehrere unterschiedliche Verteilgüter mittels der Arbeitsmaschine ausbringbar sein.

Ebenso ist in einer bevorzugten Weiterbildung der erfindungsgemäßen Arbeitsmaschine die Arbeitsmaschine als Hackgerät ausgebildet. Das Verteilgut kann dabei fest und/oder flüssig ausgeführt sein. Insbesondere können dabei mehrere unterschiedliche Verteilgüter mittels der Arbeitsmaschine ausbringbar sein.

Weitere Einzelheiten der Erfindung sind der Beispielsbeschreibung und den Zeichnungen zu entnehmen. Die Zeichnungen zeigen
- Fig.1: ein erstes Ausführungsbeispiel eines erfindungsgemäßen Befüll- und/oder Fördersystems in einer schematischen Darstellung;
- Fig.2A bis 3D: eine Rühreinrichtung des Befüll- und/oder Fördersystems in unterschiedlichen Konfigurationen und/oder Stellungen; und
- Fig.4: ein zweites Ausführungsbeispiel des erfindungsgemäßen Befüll- und/oder Fördersystems in einer schematischen Schnittansicht.

In der nachfolgenden Beschreibung werden gleiche Bezugszeichen für gleiche Gegenstände verwendet.

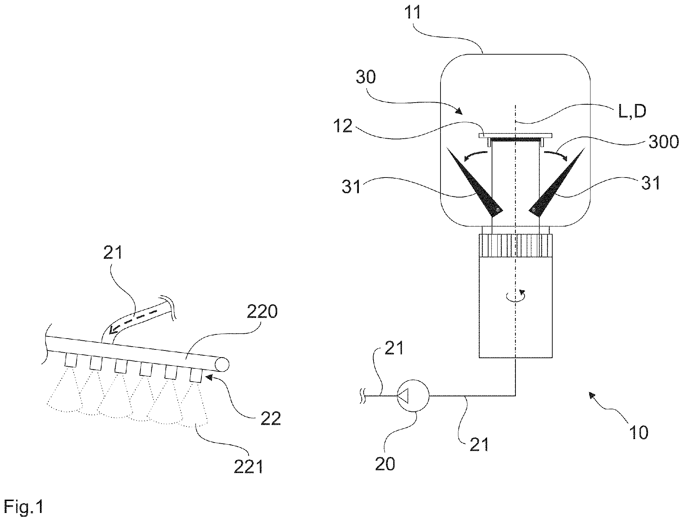

Ein erstes Ausführungsbeispiel eines erfindungsgemäßen Befüll- und/oder Fördersystems 10 für eine in den Figuren nicht näher dargestellte landwirtschaftliche Arbeitsmaschine zum Ausbringen eines Verteilguts auf einer landwirtschaftlichen Nutzfläche ist in der Fig.1 gezeigt.

Die landwirtschaftliche Arbeitsmaschine ist in diesem Ausführungsbeispiel als landwirtschaftliche Feldspritze ausgebildet. Alternativ oder zusätzlich dazu kann die Arbeitsmaschine je nach Anwendung auch nach anderen Arten landwirtschaftlicher Arbeitsmaschinen, beispielsweise nach Art einer Sä- und/oder Düngermaschine, nach Art eines Hackgeräts oder dergleichen, ausgebildet sein.

Wie in der Fig.1 zu erkennen, weist das dargestellte Befüll- und/oder Fördersystem 10 wenigstens einen Behälter 11 zum Vorhalten und/oder Bevorraten zumindest eines auszubringenden Verteilguts und/oder wenigstens eines Bestandteils des auszubringenden Verteilguts auf.

Des Weiteren ist eine optional dem Befüll- und/oder Fördersystem 10 zugeordnete und antreibbare Fördereinrichtung 20 (hier als Pumpe) zum Ansaugen und/oder Fördern des im Vorratsbehälter 11 vorgehaltenen und/oder vorhaltbaren Verteilguts zu sehen. Hierbei sei jedoch explizit erwähnt, dass das Befüll- und/oder Fördersystem 10 alternativ oder zusätzlich ohne Fördereinrichtung 20 und/oder nach anderer Art einer Fördereinrichtung oder Dosiereinrichtung, beispielsweise für granulares Verteilgut, ausgeführt sein kann. Beispielsweise wäre hierbei alternativ oder zusätzlich auch das Ansaugen mittels eines Injektors oder dergleichen denkbar.

Wie außerdem anhand der schematischen Darstellung zu erkennen ist, ist stromaufwärts und stromabwärts der optionalen Fördereinrichtung 20 wenigstens eine optionale Förderleitung 21 vorgesehen, welche hier beispielhaft nach Art einer Flüssigkeitsleitung und/oder Spritzleitung ausgeführt ist. Die wenigstens eine Förderleitung 21 kann dabei ferner nach Art einer Haupt- und/oder Versorgungsleitung ausgeführt sein. An der Förderleitung 21 können insbesondere eine Vielzahl von über der Nutzfläche verbringbaren und zum Ausbringen des hier als Spritzmittels ausgeführten Verteilguts vorgesehene Ausbringelemente 22, beispielsweise Spritzdüsen, angeordnet sein. Die Ausbringelemente 22 können, wie hier vereinfacht dargestellt, an einem Spritzbalken 220 befestigt sein. Ferner können die Ausbringelemente 22 dazu eingerichtet sein, das Verteilgut in Form eines Spritzfächers 221 auf die Nutzfläche und/oder darauf befindlicher Pflanzen zu applizieren.

Das Befüll- und/oder Fördersystem 10 ist hierbei ferner mit einer verstellbaren Rühreinrichtung 30 zum Umrühren des in dem Behälter 11 bevorratbaren und/oder befindlichen Verteilguts und/oder Bestandteils des Verteilguts ausgestattet. Die Rühreinrichtung 30 ist hierbei, insbesondere im Behälter, in und/oder zwischen unterschiedlichen Konfigurationen, insbesondere Geometrie- und/oder Stellungskonfigurationen, verbringbar und/oder verstellbar.

Wie anhand der Bewegungspfeile 300 beispielhaft angedeutet, ist vorgesehen, dass an der Rühreinrichtung 30 wenigstens eine definierte Rührspannweite und/oder Rührreichweite einstellbar ist. Die Rührspannweite und/oder Rührreichweite kann sich dabei zwischen den Konfigurationen unterscheiden und/oder in den verschiedenen Konfigurationen unterschiedlich sein. Beispielsweise kann eine Konfiguration mit quasi bzw. zumindest nahezu gar keiner Rührspannweite vorgesehen sein, während die Rührspannweite in einer anderen Konfiguration aufgeweitet und/oder auseinandergespannt ist. Alternativ oder zusätzlich können die Rührspannweite und/oder Rührreichweite auch eine definierte Rührbreite und/oder ein Rührdurchmesser der Rühreinrichtung 30 sein. Ferner sind auch Konfigurationen für wenigstens eine Zwischenstellungen denkbar, in denen Rührspannweite und/oder Rührreichweite, insbesondere die Rührbreite und/oder der Rührdurchmesser, nur teilweise ausgefahren und/oder aufgespannt ist.

Anhand der Figuren ist besonders gut zu erkennen, dass die Rühreinrichtung 30 in den gezeigten Ausführungsbeispielen nach Art eines mechanischen Rührwerks ausgebildet ist und dabei mehrere Rührelemente 31 aufweist. Alternativ oder zusätzlich dazu ist auch eine Rühreinrichtung 30 mit nur einem einzigen Rührelement 31 oder mehr als zwei Rührelementen 31 denkbar. Die Rührelemente 31 sind hierbei nach Art von Flügeln ausgebildet, können alternativ oder zusätzlich aber auch nach Art von Rührschrauben, Paddeln oder Rippen ausgeführt sein.

Die Rührelemente 31 sind in unterschiedlichen Stellungen verbringbar ausgeführt und hierzu verstellbar, insbesondere schwenkbar und/oder alternativ oder zusätzlich verschiebbar, innerhalb der Rühreinrichtung 30 angeordnet.

Der Rühreinrichtung 30 ist hierbei ferner eine Längsachse L zugeordnet, insbesondere entlang welcher die Rühreinrichtung 30 zumidnest im Wesentlichen symmetrisch ausgebildet ist. Die Längsachse L verläuft dabei zumindest abschnittsweise entlang einer Drehachse D, um welche die Rühreinrichtung 30 rotatorisch bzw. drehbar antreibbar und/oder angetrieben ist.

Die Rührelemente 31 sind hierbei insbesondere gegenüber der Längsachse L und/oder Drehachse D gesehen und/oder gegenüber dem Behälter 11 gesehen verstellbar angeordnet. Wie anhand der Figur andeutungsweise gezeigt, kann zumindest ein Ende der jeweiligen Rührelemente 31 von der Längsachse weg oder zu der Längsachse L hin verstellbar, insbesondere verschwenkbar und/oder und/oder verschiebbar, sein. Mit anderen Worten ist die Rühreinrichtung 30, insbesondere das eine oder die mehreren Rührelemente 31, gegenüber der Längsachse L gesehen zwischen einer in medialer Richtung orientierten und/oder komprimierten Konfiguration, insbesondere Stellung, und einer in lateraler Richtung erweiterten und/oder ausgebreiteten Konfiguration, insbesondere Stellung, verstellbar. Anders ausgedrückt sind die Rührelemente 31 in wenigstens einer Richtung quer zur Längsachse L verstellbar.

In den Figuren zwar nicht gezeigt, aber ebenso denkbar, dass an der Rühreinrichtung 30 alternativ oder zusätzlich wenigstens eine definierte Rührausrichtung, insbesondere ein Rührwinkel, einstellbar ist. Insbesondere kann sich dabei die Rührausrichtung der Rühreinrichtung 30 zwischen den Konfigurationen unterscheiden. Alternativ oder zusätzlich kann die Rührausrichtung auch als Rührwinkel oder Anstellwinkel bezeichnet sein. Vereinfacht ausgedrückt kann somit vorgesehen sein, dass die Rühreinrichtung 30 innerhalb des Behälters 11 zumindest abschnittsweise anstellbar und/oder anwinkelbar bzw. kippbar ist.

In den Figuren zwar ebenso nicht gezeigt, aber alternativ oder zusätzlich vorstellbar ist, dass an der Rühreinrichtung 30 wenigstens eine definierte Rührhöhe, insbesondere eine Eindringhöhe und/oder Eindringtiefe in den Behälter 11 und/oder das bevorratbare Verteilgut, einstellbar ist. Dabei ist insbesondere vorgesehen, dass sich die Rührhöhe, insbesondere die Eindringhöhe und/oder Eindringtiefe, zwischen den Konfigurationen unterscheidet. Je nach Ausführung kann beispielsweise die gesamte Rühreinrichtung und/oder nur die jeweiligen Rührelemente 31 entlang der Rühreinrichtung 30 auf eine definierte Rührhöhe einstellbar sein.

Darüber hinaus ist die Rühreinrichtung 30 dazu eingerichtet, eine dem Behälter 11 zugeordnete Verschlusseinrichtung 12, insbesondere einen Deckel, beim Einfahren in den Behälter 11 selbsttätig zu öffnen oder alternativ oder zusätzlich beim Ausfahren aus dem Behälter 11 selbsttätig, insbesondere fluid- und/oder flüssigkeitsdicht, zu verschließen. Insbesondere ist hierbei vorgesehen, dass die Verschlusseinrichtung 12 bzw. der verschließbare Deckel des Behälters 11 und/oder unterschiedlicher Behälter 11 von der Rühreinrichtung 30 beim Einfahren in den jeweiligen Behälter 11 und/oder beim Ausfahren aus dem Behälter 11 heraus zu verstellen bzw. zu öffnen und/oder zu verschließen. Der Behälter 11 kann somit zumindest weitestgehend automatisch und/oder selbsttätig von der Rühreinrichtung 30 geöffnet und/oder verschlossen werden.

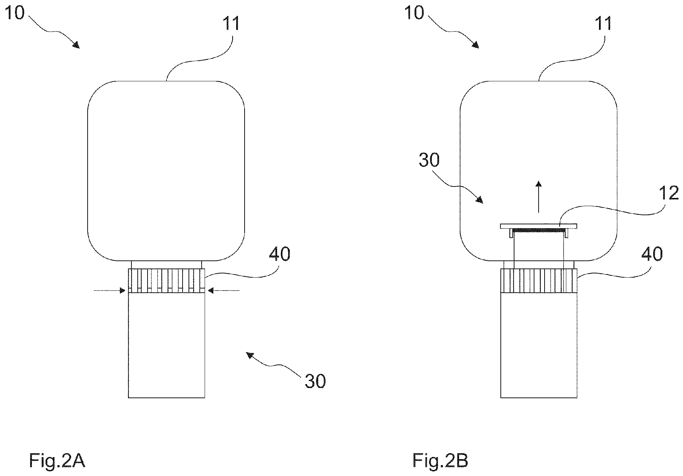

Eine alternative oder zusätzliche Möglichkeit der Verstellung der Rühreinrichtung 30 wird anhand des in den Figuren 2A bis 3D gezeigten Ausführungsbeispiels bzw. des Verstell- und/oder Bewegungsablaufes näher beschrieben.

Wie in der Fig.2A zu sehen, kann der Behälter 11, insbesondere nach Art eines von einem Anwender tragbaren Wirkstoffgebindes oder Kanisters, mittels einer Kupplungseinrichtung bzw. Behälteraufnahme 40 mit dem Befüll- und/oder Fördersystem 10 verbindbar sein. Alternativ oder zusätzlich dazu kann der Behälter 11, insbesondere als Zentral oder Hauptbehälter ausgeführt, fest und/oder unlösbar mit Befüll- und/oder Fördersystem 10 verbunden sein.

Wie anhand der Fig.2B zu sehen, kann die Rühreinrichtung alternativ oder zusätzlich in den Behälter 11 eingeführt und/oder eingefahren Mit anderen Worten wird die Rühreinrichtung 30 dabei auseinandergefahren oder auseinandergezogen, beispielsweise auch in teleskopischer Weise.

Alternativ oder zusätzlich wird dabei die dem Behälter 11 zugeordnete Verschlusseinrichtung 12, insbesondere der Deckel, von der Rühreinrichtung 30 in reversibler Weise freigegeben und/oder geöffnet.

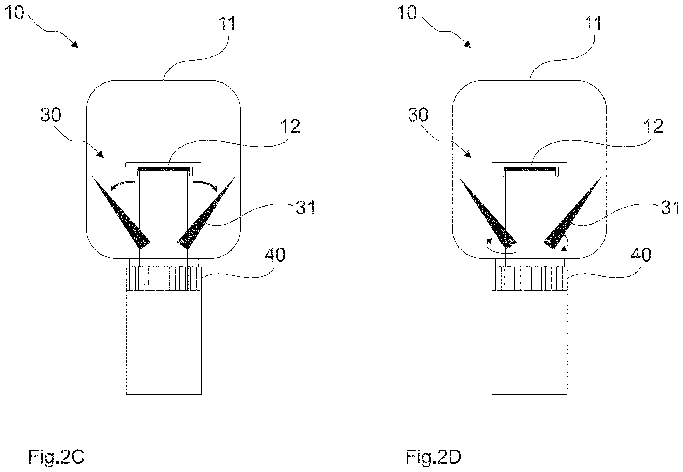

Während die Rühreinrichtung 30 in den Behälter 11 eingefahren wird und/oder nachdem eine definierte Höhe und/oder Eindringtiefe bzw. Rührhöhe und/oder Rührtiefe erreicht ist, wird die Rühreinrichtung 30 im Behälter 11 bzw. innerhalb des Behälters 11 zwischen verschiedenen Konfigurationen verstellt, wie anhand der Fig.2C zu erkennen ist. Hierzu wird die Rührbreite und/oder der Rührdurchmesser, mittels Ausklappen und/oder Ausfahren der Rührelemente 31, aufgeweitet und/oder aufgespannt.

Je nach Ausführung kann das Verstellen der Rührelemente 31 und damit der Konfigurationen selbsttätig oder alternativ oder zusätzlich fernbetätigt, beispielsweise mittels eines Aktors oder fernbetätigt, erfolgen. Insbesondere kann vorgesehen sein, dass die Rührelemente 31 beim Einfahren der Rühreinrichtung 30 in den Behälter 11 allmählich auseinander fahren und/oder bewegt werden.

Alternativ oder zusätzlich kann vorgesehen sein, dass die Rührelemente 31 erst beim Erreichen der definierten Rührhöhe zum Verstellen betätigt werden.

Sobald die Rührelemente 31 verstellt sind und/oder die Rührhöhe erreicht ist, kann die Rühreinrichtung 30, insbesondere die Rührelemente 31, alternativ oder zusätzlich innerhalb des Behälter 11 zum Umrühren des Verteilguts in Drehung versetzt werden, wie anhand der Fig.2D gezeigt ist. Alternativ oder zusätzlich wäre auch eine, insbesondere pulsierende und/oder auf und ab, Bewegungsrichtung und/oder Antriebsrichtung in vertikaler Richtung und/oder entlang der Längsachse L denkbar.

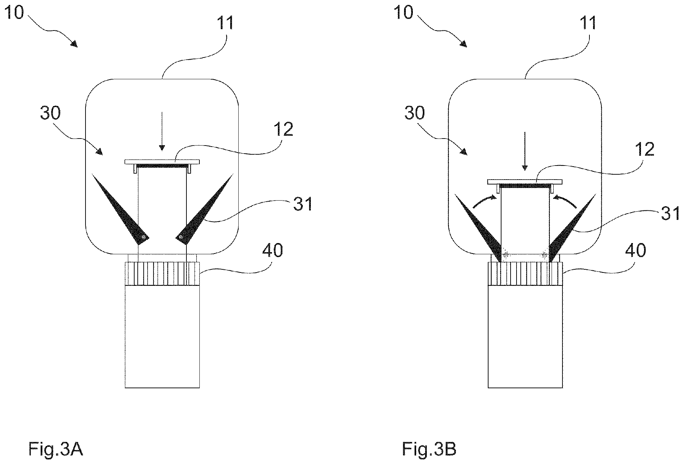

Nach dem Umrühren des Verteilguts kann die Rühreinrichtung 30 alternativ oder zusätzlich wieder aus dem Behälter 11 ausgefahren und/oder zusammengezogen werden, wie in Fig.3A gezeigt. Die Rühreinrichtung 30 ist dazu in vertikaler Richtung nach unten verfahrbar und/oder bewegbar.

Anhand der Fig.3B ist in angedeuteter Weise zu erkennen, dass die Rührelemente 31 beim Ausfahren der Rühreinrichtung 30 aus dem Behälter 11 allmählich wieder in Richtung der Längsachse L verschoben, insbesondere zusammengeklappt und/oder zusammengeschoben, werden.

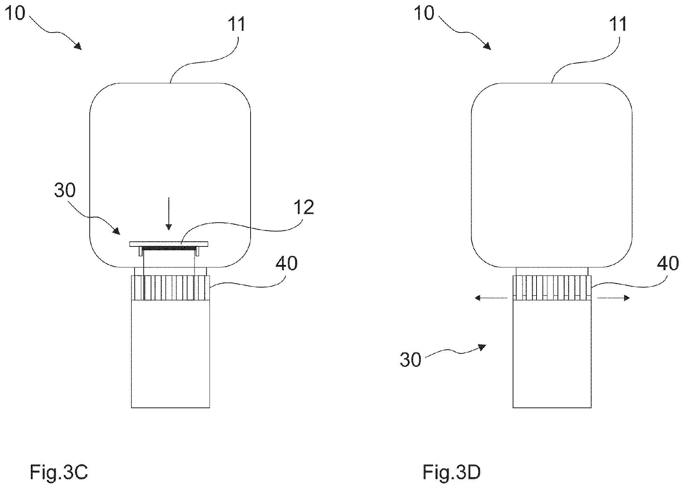

In Fig.3C sind die Rührelemente 31 vollständig zusammengeklappt und/oder zusammengeschoben und die Rühreinrichtung 30 wieder weitestgehend aus dem Behälter 11 herausgefahren und/oder herausgezogen.

In der Fig.3D ist die Rühreinrichtung 30 vollständig aus dem Behälter 11 herausgefahren und/oder herausgezogen. Dabei wird außerdem das Lösen der Kupplungseinrichtung 40 zum Abnehmen und/oder Entnehmen des Behälters 11 angedeutet. Alternativ kann dieser Schritt bei einem fest verbundenen und/oder unlösbaren Behälter 11 entfallen.

Alternativ oder zusätzlich ist dabei die dem Behälter 11 zugeordnete Verschlusseinrichtung 12, insbesondere der Deckel, von der Rühreinrichtung 30 in reversibler Weise in eine Verschlussstellung und/oder in eine Blockierstellung überführt worden. Mit anderen Worten wurde die Verschlusseinrichtung 12, insbesondere der Deckel, des Behälters 11 durch die Rühreinrichtung verschlossen.

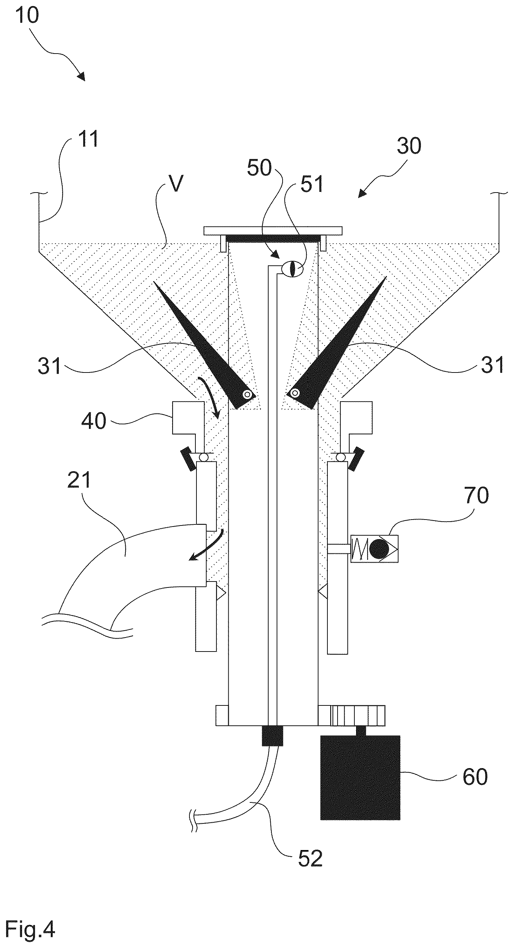

In der Fig.4 ist eine weitere Ansicht des Befüll- und/oder Fördersystems 10 in einer schematischen Schnittdarstellung gezeigt, insbesondere das Ausführungsbeispiel aus den vorherigen Figuren mit weiteren Details, wobei nachfolgend lediglich auf die Unterschiede zu den vorstehend beschriebenen Ausführungsbeispielen eingegangen werden soll. Hierbei umfasst das Befüll- und/oder Fördersystem 10 ein Closed-Transfer-System (CTS), insbesondere zum kontaktlosen Transfer und/oder automatischen Umfüllen von Verteilgut V aus einem tragbaren Behälter 11 in das Befüll- und/oder Fördersystem 10. Alternativ oder zusätzlich dazu kann das Befüll- und/oder Fördersystems 10 auch ein Einspülsystem zum manuellen Umfüllen von, insbesondere tragbaren, Behältern 11 umfassen.

Hierbei ist zu erkennen, dass die Rühreinrichtung 30 durch eine an das Befüll- und/oder Fördersystem 10 angekoppelte Öffnung des Behälters 11 hindurchführbar ist. Über die Öffnung bzw. Behälteröffnung ist die Rühreinrichtung 30 in den Behälter 11 hinein und aus dem Behälter 11 heraus verfahrbar.

Wie anhand des Schnittes zu sehen, ist in diesem Ausführungsbeispiel außerdem eine optionale Reinigungseinrichtung 50 zur Innenreinigung und/oder zum Ausspülen eines Behälters 11 vorgesehen. Die Reinigungseinrichtung 50 ist hierbei in die Rühreinrichtung 30 integriert und gemeinsam mit der Rühreinrichtung 30 verstellbar. Alternativ oder zusätzlich dazu kann die Reinigungseinrichtung 50 auch von außen an der Rühreinrichtung 30 ausgebildet und/oder angeordnet sein.

Der Reinigungseinrichtung 50 ist ferner eine Düse 51 zugeordnet, mittels welcher ein Reinigungsfluid in den Behälter 11 einleitbar ist. Die Reinigungseinrichtung 50 ist somit dazu eingerichtet, den Behälter 11 mittels des über die Düse 51 einleitbaren Reinigungsfluids zu reinigen und/oder zu spülen. Das Reinigungsfluid kann dabei eine Flüssigkeit oder Druckluft sein. Alternativ kann das Reinigungsfluid auch das Verteilgut V selbst und/oder ein Bestandteil des Verteilguts V sein. Das Reinigungsfluid ist dabei über eine Spülleitung 52 zu der Reinigungseinrichtung 50, insbesondere der Düse 51, zubringbar. Alternativ oder zusätzlich dazu können auch mehrere Düsen 51 vorgesehen sein.

Darüber hinaus ist an der Unterseite der Rühreinrichtung 30 ein Aktor 60 zu erkennen, welcher dazu eingerichtet ist, die Rühreinrichtung 30 in Drehung zu versetzen und/oder rotatorisch anzutreiben.

Ferner kann dem Befüll- und/oder Fördersystems 10 optional wenigstens eine Belüftungseinrichtung 70 zugeordnet sein, mittels welchem das Befüll- und/oder Fördersystems 10 beim Umfüllen be- und/oder entlüftet werden kann.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Befüll- und/oder Fördersystem
- 11: Behälter
- 12: Verschlusseinrichtung
- 20: Fördereinrichtung
- 21: Förderleitung
- 22: Ausbringelemente
- 220: Spritzbalken
- 221: Spritzfächer
- 30: Rühreinrichtung
- 300: Bewegungspfeil
- 31: Rührelement
- 40: Kupplungseinrichtung, Behälteraufnahme
- 50: Reinigungseinrichtung
- 51: Düse
- 52: Spülleitung
- 60: Aktor
- 70: Belüftungseinrichtung

- L: Längsachse
- D: Drehachse
- V: Verteilgut

## Patentansprüche

1. Befüll- und/oder Fördersystem (10) für eine landwirtschaftliche Arbeitsmaschine zur Ausbringung von Verteilgut (V) auf einer landwirtschaftlichen Nutzfläche, **gekennzeichnet durch** eine verstellbare Rühreinrichtung (30) zum Umrühren zumindest eines in einem Behälter (11) bevorratbaren und/oder befindlichen Bestandteils des Verteilguts (V), wobei die Rühreinrichtung (30), insbesondere im Behälter (11), in und/oder zwischen unterschiedlichen Konfigurationen, vorzugsweise Geometrie- und/oder Stellungskonfigurationen, verbringbar und/oder verstellbar ist.

2. Befüll- und/oder Fördersystem (10) nach Anspruch 1, **dadurch gekennzeichnet, dass** an der Rühreinrichtung (30) wenigstens eine definierte Rührspannweite und/oder Rührreichweite, insbesondere Rührbreite und/oder ein Rührdurchmesser, einstellbar ist, wobei sich vorzugsweise die Rührspannweite und/oder Rührreichweite, insbesondere Rührbreite und/oder der Rührdurchmesser, zwischen den Konfigurationen unterscheidet.

3. Befüll- und/oder Fördersystem (10) nach zumindest einem der vorgenannten Ansprüche 1 oder 2, **dadurch gekennzeichnet, dass** an der Rühreinrichtung (30) wenigstens eine definierte Rührausrichtung, insbesondere ein Rührwinkel, einstellbar ist, wobei sich vorzugsweise die Rührausrichtung, insbesondere der Rührwinkel, zwischen den Konfigurationen unterscheidet.

4. Befüll- und/oder Fördersystem (10) nach zumindest einem der vorgenannten Ansprüche 1 bis 3, **dadurch gekennzeichnet, dass** an der Rühreinrichtung (30) wenigstens eine definierte Rührhöhe, insbesondere eine Eindringhöhe und/oder Eindringtiefe in den Behälter (11) und/oder das bevorratbare Verteilgut (V), einstellbar ist, wobei sich vorzugsweise die Rührhöhe, insbesondere die Eindringhöhe und/oder Eindringtiefe, zwischen den Konfigurationen unterscheidet.

5. Befüll- und/oder Fördersystem (10) nach zumindest einem der vorgenannten Ansprüche 1 bis 4, **dadurch gekennzeichnet, dass** die Rühreinrichtung (30), vorzugsweise nach Art eines mechanischen Rührwerks, ein oder mehrere Rührelemente (31) aufweist.

6. Befüll- und/oder Fördersystem (10) nach Anspruch 5, **dadurch gekennzeichnet, dass** das eine oder die mehreren Rührelemente (31), insbesondere gegenüber einer Längsachse (L) der Rühreinrichtung (30) und/oder dem Behälter (11) gesehen, in unterschiedlichen Stellungen verbringbar sind.

7. Befüll- und/oder Fördersystem (10) nach Anspruch 6, **dadurch gekennzeichnet, dass** das eine oder die mehreren Rührelemente (31), insbesondere gegenüber der Längsachse (L) der Rühreinrichtung (30) und/oder dem Behälter (11) gesehen, verschiebbar und/oder schwenkbar sind.

8. Befüll- und/oder Fördersystem (10) nach zumindest einem der vorgenannten Ansprüche 1 bis 7, **dadurch gekennzeichnet, dass** die Rühreinrichtung (30), insbesondere das eine oder die mehreren Rührelemente (31), zwischen einer in medialer Richtung orientierten und/oder komprimierten Konfiguration, insbesondere Stellung, und einer in lateraler Richtung erweiterten und/oder ausgebreiteten Konfiguration, insbesondere Stellung, verstellbar ist.

9. Befüll- und/oder Fördersystem (10) nach Anspruch 8, **dadurch gekennzeichnet, dass** die Rühreinrichtung (30) entlang einer Längsachse (L) ausgebildet ist, wobei die Rühreinrichtung (30), insbesondere das eine oder die mehreren Rührelemente (31), in einer Richtung quer zu der Längsachse (L) verstellbar ist.

10. Befüll- und/oder Fördersystem (10) nach zumindest einem der vorgenannten Ansprüche 1 bis 9, **dadurch gekennzeichnet, dass** die Rühreinrichtung (30) zwischen wenigstens einer, vorzugsweise aus dem Behälter (11) heraus, ausgefahrenen und/oder herausgezogenen Außerbetriebsstellung und einer, vorzugsweise in den Behälter (11) hinein, eingefahrenen und/oder eingeschobenen Inbetriebsstellung verstellbar ist.

11. Befüll- und/oder Fördersystem (10) nach zumindest einem der vorgenannten Ansprüche 1 bis 10, **dadurch gekennzeichnet, dass** die Rühreinrichtung (30) dazu eingerichtet ist, eine dem Behälter (11) zugeordnete Verschlusseinrichtung (12), insbesondere einen Deckel, beim Einfahren in den Behälter (11) selbsttätig zu öffnen und/oder beim Ausfahren aus dem Behälter (11) selbsttätig, insbesondere fluid- und/oder flüssigkeitsdicht, zu verschließen.

12. Befüll- und/oder Fördersystem (10) nach zumindest einem der vorgenannten Ansprüche 1 bis 11, **gekennzeichnet durch** eine Reinigungseinrichtung (50) zur Innenreinigung und/oder zum Ausspülen eines Behälters (11), wobei die Reinigungseinrichtung (50) gemeinsam mit der Rühreinrichtung (30) verstellbar ist.

13. Befüll- und/oder Fördersystem (10) nach Anspruch 12, **dadurch gekennzeichnet, dass** der Reinigungseinrichtung (50) wenigstens eine Düse (51) zugeordnet ist, mittels welcher ein Reinigungsfluid in den Behälter (11) einleitbar ist, wobei die Reinigungseinrichtung (50) dazu eingerichtet ist, den Behälter (11) mittels des über die Düse (51) einleitbaren Reinigungsfluids zu reinigen und/oder zu spülen.

14. Befüll- und/oder Fördersystem (10) nach zumindest einem der vorgenannten Ansprüche 1 bis 13, **gekennzeichnet durch** ein Einspül- und/oder Closed-Transfer-System zum Aufnehmen und/oder Übertragen wenigstens eines Bestandteils des Verteilguts (V) aus einem, insbesondere mobilen und/oder händisch tragbaren, Behälter (11) in das Befüll- und/oder Fördersystem (10), wobei die Rühreinrichtung (30) und/oder die Reinigungseinrichtung (50) dem Einspül- und/oder Closed-Transfer-System zugeordnet ist, und vorzugsweise zum Umrühren und/oder Reinigen des, insbesondere mobilen und/oder händisch tragbaren, Behälters (11) vorgesehen ist.

15. Befüll- und/oder Fördersystem (10) nach Anspruch 14, **dadurch gekennzeichnet, dass** das Einspül- und/oder Closed-Transfer-System eine Behälteraufnahme (40) zum reversiblen und verteilgutleitenden Verbinden des, insbesondere mobilen und/oder händisch tragbaren, Behälters (11), vorzugsweise verschiedener und/oder austauschbarer Behälter (11), umfasst, wobei die Rühreinrichtung (30) und/oder Reinigungseinrichtung (50) durch die Behälteraufnahme (40) hindurchführbar, insbesondere in den Behälter (11) einführbar und/oder ausführbar, ist.

16. Verfahren zum Betreiben eines Befüll- und/oder Fördersystems (10) für eine landwirtschaftliche Arbeitsmaschine zur Ausbringung von Verteilgut (V) auf einer landwirtschaftlichen Nutzfläche, vorzugsweise eines Befüll- und/oder Fördersystems (10) nach zumindest einem der vorgenannten Ansprüche, **gekennzeichnet durch** eine verstellbare Rühreinrichtung (30) zum Umrühren zumindest eines in einem Behälter (11) bevorratbaren und/oder befindlichen Bestandteils des Verteilguts (V), wobei die Rühreinrichtung (30), insbesondere im Behälter (11), in und/oder zwischen unterschiedlichen Konfigurationen, vorzugsweise Geometrie- und/oder Stellungskonfigurationen, verbracht und/oder verstellt wird.

17. Verfahren nach Anspruch 16, **gekennzeichnet durch** zumindest einen der nachfolgenden Schritte:
- Einführen und/oder Einfahren, insbesondere Ausziehen, der Rühreinrichtung (30) in einen Behälter (11); und/oder
- Verstellen der Rühreinrichtung (30) im Behälter (11) zwischen verschiedenen Konfigurationen, insbesondere Stellungen; und/oder
- Einstellen und/oder Anpassen einer definierten Rührreichweite und/oder Rührausrichtung und/oder Rührhöhe; und/oder
- Verstellen ein oder mehrerer an der Rühreinrichtung (30) angeordneter und/oder ausgebildeter Rührelemente (31), vorzugsweise zwischen unterschiedlichen Stellungen gegenüber einer Längsachse (L) der Rühreinrichtung (30) und/oder dem Behälter (11); und/oder
- Umrühren des Verteilguts (V) mittels der, insbesondere verstellten und/oder in eine Inbetriebsstellung überführten, Rühreinrichtung (30), insbesondere Rührelemente (31); und/oder
- Ausführen und/oder Ausfahren, insbesondere Einziehen, der Rühreinrichtung (30) aus dem Behälter (11).

18. Landwirtschaftliche Arbeitsmaschine, vorzugsweise Verteilmaschine, zum Ausbringen von Verteilgut (V) auf einer landwirtschaftlichen Nutzfläche, mit einem Befüll- und/oder Fördersystem (10), **dadurch gekennzeichnet, dass** das Befüll- und/oder Fördersystem (10) nach zumindest einem der vorgenannten Ansprüche 1 bis 15 ausgebildet ist und/oder die Arbeitsmaschine dazu ausgebildet ist, dass Verfahren nach zumindest einem der vorgenannten Ansprüche 16 oder 17 auszuführen.

19. Landwirtschaftliche Arbeitsmaschine nach Anspruch 18, **dadurch gekennzeichnet, dass** die Arbeitsmaschine als landwirtschaftliche Feldspritze ausgebildet ist, wobei das Verteilgut (V) vorzugsweise nach Art eines Spritzmittels ausgeführt ist.
